Europäisches Patentamt

European Patent Office

Office européen des brevets

(11) Publication number: **0 263 159 B1**

(12) **EUROPEAN PATENT SPECIFICATION**

(45) Date of publication of patent specification: **12.08.92**  (51) Int. Cl.⁵: **H01M 2/16, C25B 13/08**

(21) Application number: **87902594.8**

(22) Date of filing: **06.04.87**

(86) International application number:
**PCT/GB87/00237**

(87) International publication number:
**WO 87/06395 (22.10.87 87/23)**

The file contains technical information submitted
after the application was filed and not included in
this specification

(54) **COMPOSITE MEMBRANE.**

(30) Priority: **07.04.86 GB 8608430**

(43) Date of publication of application:
**13.04.88 Bulletin 88/15**

(45) Publication of the grant of the patent:
**12.08.92 Bulletin 92/33**

(84) Designated Contracting States:
**BE CH DE FR GB IT LI NL**

(73) Proprietor: **SCIMAT LIMITED**
**Lennox House Spa Road**
**Gloucester(GB)**

(72) Inventor: **COOK, John, Anthony**
**18 Beech Close Orchard Hill**
**Faringdon Oxfordshire SN7 7EN(GB)**
Inventor: **SMITH, Ian, Stephen**
**59 Matley Moor Liden, Swindon**
**Wiltshire SN3 6NL(GB)**
Inventor: **SINGLETON, Raymond, William**
**The Nook Down Ampney, Cirencester**
**Gloucestershire GL7 5OW(GB)**

(74) Representative: **Belcher, Simon James et al**
**Urquhart-Dykes & Lord Tower House Merrion**
**Way**
**Leeds LS2 8PA(GB)**

Rank Xerox (UK) Business Services

**Description**

This invention relates to a process for making a polymeric ion exchange membrane which is particularly useful as an electrode separator in certain types of electrochemical device.

In certain types of electrochemical device, in particular of electrochemical cell, lifetime can be limited by migration of electrode material in particulate form and in solution onto the opposing electrode and subsequent self-discharge. Another problem arises in secondary cells on recharging when loosely attached material is deposited on the anode, often in the form of dendrites. These problems can be overcome by use of an electrode separator which provides a continuous barrier to electrode particles and which allows ionic conduction.

US-2965697 (Duddy) discloses a battery diaphragm which consists of a porous matrix in which pores are filled with crosslinked polyacrylic acid. The diaphragm is made by impregnating a porous matrix, for example of polyethylene, with a mixture of methacrylic acid, divinyl benzene and benzoyl peroxide, and then applying heat to initiate polymerisation of the acid. The polymerisation reaction is exothermic and once it has been initiated, it is necessary to apply heat moderating means in order to ensure that the rate of reaction is controlled.

The process described in US-2965697 is a slow and inconvenient batch process, and requires the use of the above-mentioned heat moderating means. However, even with such apparatus, the process is particularly difficult to control so as to produce diaphragms with consistent properties.

US-4346142 discloses a process for rendering a hydrophobic open celled film hydrophilic, by fixing a hydrophilic monomer on to the surface of the pores of the film by means of ionising radiation, while preserving the open celled structure of the film.

GB-A-2098628 discloses a diaphragm for use in an electrolysis cell, which comprises a porous sheet and an ion exchange resin which occupies a portion of the pore volume within the sheet.

The present invention provides a convenient process for making a composite membrane which involves the use of irradiation, particularly using ultraviolet (UV) radiation to effect crosslinking of an ion exchange material within the pores of a porous matrix.

Accordingly in a first aspect, the present invention provides a process for making a polymeric ion exchange membrane, which comprises:

(a) providing a membrane comprising a first polymeric material which defines a porous matrix, and a second material which includes a photoinitiator and which at least partially fills, and thereby blocks, the pores of the matrix, and

(b) exposing the membrane to UV radiation so as to polymerise and to crosslink the second material;

the thickness of the membrane being less than 250 micrometres.

The process of the invention has the advantage that it can be performed continuously on a continuous strip of the composite membrane, by passing the strip under a source of radiation rather than by exposing a membrane to heat. The sheet may be in the form of a film, tape, or ribbon, or in the form of a tube. Other sheet-like forms may be used depending upon the application. Preferably, the sheet will be flexible. The source of radiation will preferably provide UV radiation which is cheap and convenient to use with small safety risks. It is envisaged however that gamma radiation such as from a $Co^{60}$ source or electron bombardment may be used as alternative radiation sources. An appropriate initiator will generally be mixed with the second material for initiation of the crosslinking reaction, and where necessary for initiation of polymerisation of the second material. When UV radiation is used, a photoinitiator will be mixed with the second material. Suitable photoinitiators are well known in the prior art such as acetophenone, propiophenone, xanthone, fluorenone, 3- or 4-methoxyacetophenone, 2-hydroxy-2-methyl-1-phenylpropan-1-one, 1-(4-isopropylphenyl)-2-hydroxy-2-methylpropan-1-one and 1-hydroxycyclohexylphenyl ketone etc.

Furthermore, the use of irradiation, especially UV irradiation, has the advantage that the crosslinking step is readily controllable, it being possible to control the degree of crosslinking by selecting an appropriate exposure of the membrane to the radiation. Thus it is possible to produce continuous lengths of irradiated membrane with consistent properties, and to ensure that those properties are reproduced in subsequent lengths.

UV radiation has the further advantage that its energy is suitable for effecting the crosslinking of thin films; radiation from other sources with higher energy is absorbed only slightly by thin membranes.

A yet further advantage of UV radiation is that it has been found to increase the wettability of a membrane, possibly as a result of ionisation of its surface. This is useful because it can facilitate subsequent reaction of components of the membrane: for example, it can facilitate neutralisation of acrylic acid when used as the second material of the membrane.

The ability to control the degree of crosslinking has been found to lead to an important subsidiary advantage in that fundamental properties of the membrane can conveniently be altered. These include the ionic conductivity through the membrane (when used as a separator in an electrochemical cell) and also the barrier properties of the membrane for example towards dissolved electrode material. Both the barrier properties and the conductivity depend inter alia on the extent to which the membrane swells on contact with a liquid such as the electrolyte of an electrochemical cell, particularly an alkaline electrolyte: a swollen membrane will have a high conductivity but poor barrier properties compared with a relatively less swollen membrane, since liquid electrolyte can more easily be absorbed into the membrane when it is swollen. The degree of swelling is affected by the density of the crosslinks in the second material of the membrane. Thus, simply by altering the crosslink density, it is possible to vary the barrier properties and ionic conductivity of the membrane, such alteration being particularly simple to effect in the method according to the present invention. This allows membranes to be made conveniently to suit the requirements of particular applications. For example in the case of alkaline electrochemical cells the barrier properties required of the membrane are dependent to some extent on the solubility of electrode material in the cell electrolyte. Thus, the present invention enables a separator to be made conveniently for a mercury/mercuric oxide cell that has a higher conductivity than one for a silver/silver oxide cell, which is desirable because of the lower solubility of mercuric oxide in alkaline solution. The present invention therefore enables membranes to be made conveniently to suit each particular application with optimum conductivity.

Preferably, the pores defined by the matrix of the first material are blocked over substantially the entire area of the membrane. It is particularly preferred that the pores be substantially filled with the second material, it being understood that this does not necessitate the exposed surface of the second material in the pores being exactly in line with the main surface of the membrane, and the degree of filling may vary somewhat depending on the shape, size, and tortuosity of the pores. Pores which are much less than completely filled by the second material within them may be suitable for some purposes, provided that the pores remain substantially blocked at some point within their length, in the sense that there is no passage within the pore whereby fluids may readily pass the blocking "plug" without having to permeate the plug and/or the surrounding wall material of the pore.

For optimum barrier properties, it is preferred that at least 20% of the volume of the pores within the matrix of the first polymeric material is filled by the second material, more preferably at least 75%, especially at least 95%.

In a preferred embodiment of this invention, the second material in the pores of the matrix is mixed with a crosslinking agent to effect the crosslinking of the second material. The density of crosslinks can be affected by the proportion of crosslinking agent to second material. Preferably the mole ratio of crosslinking agent to second material is at least 0.1%, more preferably at least 0.5%, especially between 1% and 15%. The need for a crosslinking agent will depend on the particular second material that is selected, and in some cases on the intended end use of the article.

The second material may be selected according to the intended end use of the membrane, polymeric materials (including homo- and copolymers and mixtures thereof) being preferred. Materials which may be used to form a second polymeric material include ethylenically unsaturated acids and their esters for example acrylic acid, methacrylic acid, ethyl acrylate and methylacrylate, maleic acid, maleic anhydride, acrylamide N-monomethyl and N,N-dimethylacrylamide, vinyl acetate, vinyl pyridines for instance 2-vinylpyridine, 2-methyl-5-vinylpyridine and 2-vinyl-5-ethylpyridine. Sulphonation of suitable second materials (e.g. styrene monomer or polymer) for ion exchange purposes may be useful. Polymers or copolymers of ethylenically unsaturated acids are preferred for ionically active sheets such as electrochemical cell electrode separators, acrylic and methacrylic acid polymers of copolymers being especially preferred. In any case, second materials which are polyelectrolytes may be selected to provide the article with an ion-exchange capacity, preferably greater than 1 milliequivalent per gramme (meq.g$^{-1}$), preferably greater than 3 meq.g$^{-1}$ and ideally greater than 5 meq.g$^{-1}$.

The second material can conveniently be supplied to the pores of the matrix of the first material in monomer form and then polymerised in situ when the membrane is irradiated. This is particularly advantageous when the second material is a liquid when monomeric and a solid when polymerised since it enables the pores within the matrix to be filled substantially completely with the polymerised second material simply by impregnation, for example under vacuum, with the liquid monomer.

When the second material is polymerised by irradiation, polymerisation and crosslinking reactions compete for the monomeric second material. By selecting a crosslinking agent with an appropriate reactivity towards the monomeric second material, compared with the reactivity of that material in polymerisation, the density of crosslinks can be adjusted to suit a particular application, as described above.

Surprisingly, it has been found that certain crosslinking agents react with preferred second materials such as acrylic acid derivatives at such a rate as to give a crosslink density which renders the crosslined second material inert to aqueous acid and base; such crosslinking agents generally form a secondary radical (whether conjugated or non-conjugated) or a tertiary non-conjugated radical when irradiated. Such particularly preferred crosslinking agents include triallyl isocyanurate (TAIC), triallyl cyanurate (TAC), 1,5-hexadiene-3-ol, 2,5-dimethyl-1,5-hexadiene, 1,5-hexadiene, 1,7-octadiene, 3,7-dimethyl-2,6-octadiene-1-ol (Nerol™) and diacrylates such as polyethylene glycol diacrylate and dimethacrylate and triethylene glycol dimethacrylate.

The use of irradiation, particularly UV radiation, enables the process of the present invention to be carried out more quickly and more efficiently than the thermally initiated crosslinking reactions used in prior art processes. Thus the crosslinking reaction can, in favourable circumstances, be completed in less than 30 seconds.

The second material, together with initator and crosslinking agent when present, may be introduced into the pores of the matrix of the first polymeric material in solution. It is however desirable to use a solution of the second material which polymerises and is crosslinked at an acceptable rate without unacceptable phase separation of the solution. For example, a solution consisting of the following could be used (percentages given by weight):

| acrylic acid (reactive monomer) | 60 to 95% |
| crosslinking agent | 0.5 to 25% |
| photoinitiator | 0.1 to 5% |
| water | up to about 60% |

The matrix of the first material is preferably formed by removal, preferably by liquid extraction, of a removable material dispersed therein. Liquid extraction of polyethylene oxide from an article comprising a mixture of polyethylene and polyethylene oxide is a preferred example, other possibilities including liquid extraction of solid fillers from sheet comprising the filler and a polymer such as polyethylene, the filler being for example lithium carbonate and the extraction medium being hydrochloric acid; extraction of polyvinylacetate from polyvinlychloride sheet; or extraction of ethylene/vinylacetate copolymer from isotactic polypropylene.

It will be understood that when the term porous is used to describe the matrix of the first material, the term is applicable to a component of a membrane which consists of interpenetrating phases.

The membrane made by the present method preferably has a thickness of less than 250 micrometres, and especially less than 150 micrometres. For use as an electrode separator in an electrochemical device such as a cell, it is preferred that the thickness of the membrane is from 25 to 100 micrometres, and it is an advantage of the membrane made by the present method that such a relatively thick barrier without direct open passages through it can be used to resist penetration by, for example, silver oxide in silver-zinc cells, or by dendrite growth, while surprisingly lowering the electrical resistance by as much as 50% compared with much thinner (25 to 30 micrometres) known membranes in which acrylates are merely radiation-grafted onto a substantially non-porous polymer sheet to improve its characteristics. Other known membranes in which acrylic acid is grafted onto the pore surfaces without blocking the pores require a further absorbent layer to resist penetration, the need for which layer is eliminated by the present invention.

The present invention thus allows membranes to be made which are sufficiently thick to provide a barrier in an electrochemical cell. However, the membranes are not so thick that they are inflexible; indeed, the fact that the present method allows the crosslink density in the second material to be controlled also enables the flexibility of the membrane to be optimised.

Extraction methods of forming the matrix of the first polymer are preferred because the pores produced tend to have a higher tortuosity factor (defined as mean path length/article thickness), determined by resistance measurements as known per se, than pores produced by stretching or perforation techniques. Higher tortuosity is thought to be desirable in order to help retain volatile polymerisable materials such as acrylic acids in the pores until polymerisation is effected, tortuosity factors greater than 2, preferably greater than 4, more preferably greater than 6, and even greater than 7 or greater than 8 are therefore desirable. Mean diameter and porosity can be measured by for example, mercury intrusion porosimetry (ASTM-D-2873-70), and the length by electron microscopy.

However made, it is preferred that the matrix of the first material is microporous, such that the details of its structure are discernable only by microscopic examination. It is particularly preferred that the structure of the pores is so fine that discernment thereof is possible only by use of electron microscopy techniques, which can resolve details of structure below 5 micrometres.

Preferably, the volume of the pores is at least 10%, more preferably at least 30% in order to achieve satisfactory conductivity. A pore volume of 80 to 90% is preferred for many applications.

Preferably, the second material after irradiation is more permeable (ie has a faster diffusion rate) than the first polymeric material to selected ions encountered when the membrane is in use; for example when in use as a cell electrode in an alkaline electrochemical cell, the second material will preferably be relatively permeable to hydrogen and/or hydroxide ions. Both the first and second materials should be substantially inert towards fluids encountered by the membrane when in use, although beneficial interactions such as swelling when desired are not excluded. "Inert" as used herein means that the materials are not destroyed, disintegrated or otherwise unacceptably affected by such fluids. The susceptibility of the second material to removal from the membrane made by the present method is believed to be reduced as a result of grafting of the second material on to the matrix of the first material, simultaneously with the crosslinking reaction.

In another aspect, the present invention provides an electrochemical device, such as an electrochemical cell, which comprises an anode, a cathode, a liquid electrolyte, and an electrode separator which is a composite polymer membrane that is made by the method of the invention.

In addition to its use as a separator in an electrochemical cell, the membrane of the present invention may also be used in other applications where ion exchange properties are required. By appropriate selection of second materials, the membrane may be used in biological applications, for example in dialysis.

Specific embodiments of the invention will now be described by way of example, using a porous film made as follows.

Medium density polyethylene granules (Sclair 8405™ from Du Pont) and polyethylene oxide (Polyox WSRN 750™ from Union Carbide) were compounded using a Baker Perkins twin screw extruder to give a blend containing 40 parts of polyethylene and 60 parts by weight polyethylene oxide. The compound was then blown into a 100 micrometre (micron) thick film using conventional blown polymer film techniques. The die gap was 0.65 millimetres and the die temperature 210°C. The blow ratio was 2:1.

The blown film was then immersed in water to remove the polyethylene oxide by dissolution. The film was then removed from the water and dried to leave a microporous web of polyethylene.

Using mercury intrustion porosimetry (ASTM D2873-70) the porosity of the microporous film was found to be 50% and the average pore diameter was 1 micrometre.

The film was found not to be wetted by water or alkaline electrolytes. Using the method described in "Characteristics of Separators for Alkaline Silver Oxide Secondary Batteries", AD447301 US Air Force Manual, the resistance of the film after 24 hours in 40% ww potassium hydroxide (KOH) at 30°C was found to be 11.9 ohm.cm$^2$.

Example 1

A battery separator was prepared by taking a continuous length of the microporous film (width 10 cm) described above and vacuum impregnating the film with a solution of the following composition (all amounts percent by weight).

| | |
|---|---|
| Acrylic Acid (supplied by Aldrich) | 63% |
| Triallyl Isocyanurate (Nippon Kasei Chemical Co Ltd) | 5% |
| Daracur 1116™ (Merck) | 5% |
| Water | 27% |

(1) Daracur 1116 is
1-(4-Isopropylphenyl)-2-hydroxy-2-methypropanel-1-one, a photoinitiator.

The percentage mole ratio of the crosslinking agent to acrylic acid was 2.3%.

Care was taken to make sure that all the pores within the film were completely filled with the solution. The impregnated solution was then photopolymerized within the pores by passing the film at a speed of 0.4 metres per minute under a 15.4 cm long 500 watt medium pressure mercury vapour UV lamp (Hanovia Type UVS 500). The distance between the lamp and the microporous film was 6 cm and the total irradiation time for any part of the film was 22 seconds.

The above process of impregnation and UV irradiation was repeated on the previously unexposed side of the film.

After irradiation the treated film was washed in methanol and then water to remove unreacted monomer and photoinitiator. The film was then further treated in 5% w/w KOH at 60°C for 16 hours to convert the polymerized acrylic acid into its potassium ion form. Finally, the film was washed again with water before being allowed to dry within a constant 50% relative humidity environment.

The separator thus produced was strong and flexible and had a final thickness of 100 micrometres. The moisture content as determined by drying at 100°C was 15%. Chemical analysis showed the separator contained 43% acrylic acid with respect to its dry acid form. The ion exchange capacity was 6 meq.g$^{-1}$. Table 1 below lists some additional characteristics of the separator. These characteristics were determined according to the methods described in "Characteristics of Separators for Alkaline Silver Oxide Secondary Batteries", AD447301 US Air Force Manual.

TABLE 1

Resistance                                    0.145 ohm cm$^2$
(40% ww KOH at 30°C)

Electrolyte Diffusion                         0.21 mmol cm$^{-2}$ min$^{-1}$
(10 Molar KOH gradient at 25°C)

Dimensional change
(40% KOH at 30°C)
Length                                        +6%
Width                                         +15%
Thickness                                     +50%

Electrolyte Absorption                        160%
(40% ww KOH at 30°C)

Oxidation Resistance                          2%
(weight loss, Alkaline Permanganate)

Barrier to Ag$_2$O                            Very good

Example 2

Additional battery separators of thickness 50 micrometre and 200 micrometre (micron) were prepared according to the method described in Example 1. The resistance of these separators in 40% ww KOH at 30°C is given in Table 2.

TABLE 2

| Separator thickness (micrometres) | Resistance (ohm cm$^2$) |
|---|---|
| 50 | 0.085 |
| 200 | 0.220 |

Example 3

The long term stability of the battery separator was evaluated by storing pre-weighed samples made according to Example 1 in 40% ww KOH at 60°C for various periods of time. After storage the samples were dried, re-weighed to determine any weight loss and then their resistance in 40% ww KOH at 30°C determined. The results are shown in Table 3 below and clearly demonstrate the stability of the separator to strong alkaline electrolytes.

TABLE 3

| Storage Time (weeks) | Weight Loss (%) | Resistance (ohm cm$^2$) |
|---|---|---|
| 0 | 0 | 0.145 |
| 2 | 0 | 0.167 |
| 4 | 0.7 | 0.154 |
| 6 | 2.5 | 0.125 |
| 8 | 3.5 | 0.157 |

Example 4

This example demonstrates how the proportion of crosslinking agent to acrylic acid in the impregnation solution can alter the properties of the separator by changing the density of crosslinks.

A battery separator was prepared according to the method described in Example 1 using an impregnation solution of the following composition.

| | |
|---|---|
| Acrylic acid | 68% |
| Triallyl Isocyanurate | 15% |
| Daracur 1116 | 6% |
| Water | 11% |

The percentage mole ratio of the cross-linking agent to acrylic acid was 6.4%.

The separator thus produced was strong and flexible and had a final thickness of 110 micrometre (micron). The moisture content was 15%. The separator contained 35% acrylic acid and had an ion exchange capacity of 4.9 meq. g$^{-1}$. Table 4 below lists some additional characteristics of the separator.

## TABLE 4

| | | |
|---|---|---|
| Resistance | | 0.830 ohm.cm$^2$ |
| Dimensional Stability | length | +3% |
| | width | +5% |
| | thickness | +7% |
| Electrolyte Absorption | | 81% |
| Oxidation Resistance | | 2% |
| Barrier to Ag$_2$O | | Very good |

The separator showed a weight loss of only 7% after 8 weeks storage in 40% ww KOH at 60°C.

A comparison of the date in Table 4 and Table 1 (Example 1) clearly shows the effect of increased density of cross-links on separator properties. Of particular note is increased resistance and a reduction in dimensional changes in alkaline electrolyte.

Example 5

Battery separators were prepared according to the method described in Example 1 using the cross-linking agents 1,5-hexadiene, 1,5-hexadiene-3-ol and 3,7-dimethyl-2,6-octadiene-1-ol (all supplied by Aldrich Chemical Co Ltd). The % compositions by weight of the impregnation solutions were as follows:

| Composition No. | 1 | 2 | 3 |
|---|---|---|---|
| Acrylic Acid | 65.5 | 64 | 60.5 |
| 1,5-hexadiene | 9.5 | - | - |
| 1,5-hexadiene-3-ol | - | 11 | - |
| 3,7-dimethyl-2,6-octadiene-1-ol | - | - | 16.2 |
| Daracur 1116 | 5 | 5 | 4.7 |
| Water | 20 | 20 | 18.6 |

The percentage mole ratio of the cross-linking agent to acrylic acid was 12.5% for all solutions.

The separators thus produced were all strong and flexible and had a final thickness of 90 to 100 micrometre (micron). Additional properties of the separators are given in Table 5 below.

TABLE 5

| Composition No. | | 1 | 2 | 3 |
|---|---|---|---|---|
| Acrylic Acid Content (%) | | 35 | 30 | 27 |
| Resistance (ohm.cm$^2$) | | 0.310 | 0.810 | 1.240 |
| Dimensional Stability (%) | length | +1.2 | +1.9 | -0.3 |
| | width | +12.6 | +7.4 | +0.5 |
| | thickness | +72 | +56 | +19 |
| Electrolyte Absorption (%) | | +206 | +169 | +132 |

The stability of these separators to 40% ww KOH was determined according to the procedure described in Example 3. The results of these studies are presented below and show that all the cross-linking agents produce separator stable 40% ww KOH even at 100°C.

| Cross-linking Agent | Temperature (0°C) | Storage Time (Days) | Weight Loss (%) |
|---|---|---|---|
| 1,5-Hexadiene | 60 | 26 | 3.7 |
| | 100 | 9 | 18.9 |
| 1,5-Hexadiene-3-ol | 60 | 26 | 3.2 |
| | 100 | 9 | 2.1 |
| 3,7-dimethyl-2,6-octadiene-1-ol | 60 | 26 | 4.9 |
| | 100 | 9 | 15.1 |

Example 6

Battery separators were prepared according to the method described in Example 1 except the crosslinking agent triallyl isocyanurate was replaced by either triallyl cyanurate (Nippon Kasei Chemical Co Ltd) or polyethylene glycol 200 diacrylate (Sartomer product SR259™). The stability of these separators to alkaline electrolyte was determined according to the procedure described in Example 3. The result of these studies are presented in Table 4 below and show that both crosslinking agents are unsuitable for use with alkaline electrolytes.

TABLE 6

| Crosslinking Agent | Storage Time (Days) | Weight Loss (%) | Resistance (ohm cm$^2$) |
|---|---|---|---|
| Triallyl Cyanurate | 0 | 0 | 0.157 |
| | 1 | 44.7 | 1.38 |
| | 2 | 46.2 | 1.45 |
| Polyethylene glycol 200 diacrylate | 0 | 0 | 0.123 |
| | 4 | 60 | 15.5 |

Example 7

The resistance and stability of the separator materials described in Examples 1, 4, 5 and 6 were evaluated in 28% w/w sulphuric acid ($H_2SO_4$). All the separators were found to be stable in the acid with resistance of about 3 ohm cm 2.

Comparative Example

Using the microporous film described above, a battery separator was prepared according to the method given in US-2965697. The polymerisation reaction was carried out using the heated platen technique and took 20 minutes to complete. The impregnation solution had the following composition (percentage by weight).

| | |
|---|---|
| Benzoyl Peroxide (Aldrich Chemical Co Ltd) | 3.4% |
| Acrylic Acid | 85.7% |
| Triallyl Isocyanurate | 10.9% |

The percentage mole ratio of the crosslinking agent to acrylic acid was 3.7%.

The separator thus produced was strong but rigid. It had a thickness of 105 micrometre (micron) and a moisture content of 15.6%. Analysis showed the separator contained 51% acrylic acid. The ion exchange capacity was 7.1 meq.g$^{-1}$. The separator resistance was 4.83 ohm.cm$^2$, which was too high to make it of any practical use in an alkaline cell.

For comparison, a battery separator was prepared according to the method of the present invention using an impregnation solution with the same percentage mole ratio of crosslinking agent to acrylic acid as that described above. The separator thus produced was strong and flexible with a thickness of 90 micrometre (micron). Its moisture content was 15.6% and it contained 43% acrylic acid. The ion exchange capacity was 6.0 meq.g$^{-1}$. The separator resistance was 0.850 ohm.cm$^2$ making it suitable for use in alkaline cells.

**Claims**

1. A process for making a polymeric ion exchange membrane, which comprises:
   (a) providing a membrane comprising a first polymeric material which defines a porous matrix, and a second material which includes a photoinitiator and which at least partially fills, and thereby blocks, the pores of the matrix, and
   (b) exposing the membrane to UV radiation so as to polymerise and to crosslink the second material;
   the thickness of the membrane being less than 250 micrometres.

2. A process as claimed in claim 1, which includes the step of forming a porous matrix of the first polymeric material by removal of a pore forming material.

3. A process as claimed in claim 2, in which the first polymeric material is polyethylene and the porous matrix is formed by liquid extraction of polyethylene oxide dispersed therein.

**4.** A process as claimed in any one of the preceding claims, which includes the step of impregnating the porous matrix with the second material.

**5.** A process as claimed in any one of the preceding claims, in which the second material is mixed with a crosslinking agent.

**6.** A process as claimed in claim 5, in which the mole ratio of crosslinking agent to the second material is at least 0.1%.

**7.** A process as claimed in claim 5 or claim 6, in which the crosslinking agent forms a secondary radical or a tertiary non-conjugated radical when the membrane is irradiated.

**8.** A process as claimed in any one of the preceding claims, in which the second material comprises an ethylenically unsaturated acid or an ester thereof.

**9.** A process as claimed in any one of the preceding claims, in which the second material and the conditions under which it is irradiated are selected to provide the membrane with an ion exchange capacity of greater than 1 milliequivalent per gram.

**10.** A process for making an electrochemical device, which includes making a composite polymer membrane by a process as claimed in any one of claims 1 to 9, and immersing the membrane, together with an anode and a cathode, in liquid electrolyte.

**11.** An electrochemical device which comprises an anode, a cathode, a liquid electrolyte, and an electrode separator which is a composite polymer membrane that is made by the process claimed in any one of claims 1 to 9

**Revendications**

**1.** Procédé pour produire une membrane polymère d'échange d'ions, qui comprend :
(a) l'obtention d'une membrane comprenant une première matière polymère qui définit une matrice poreuse, et une seconde matière qui inclut un photo-amorceur et qui emplit au moins partiellement, et ainsi bloque ou obture, les pores de la matrice, et
(b) l'exposition de la membrane à un rayonnement ultraviolet de façon à polymériser et à réticuler la seconde matière ;
l'épaisseur de la membrane étant inférieure à 250 $\mu$m.

**2.** Procédé tel que revendiqué à la revendication 1, qui inclut l'étape de formation d'une matrice poreuse de la première matière polymère, par enlèvement d'une matière de formation des pores.

**3.** Procédé tel que revendiqué à la revendication 2, dans lequel la première matière polymère est du polyéthylène, et la matrice poreuse est formée par extraction à l'aide d'un liquide du poly(oxyde d'éthylène) qui y est dispersé.

**4.** Procédé tel que revendiqué dans l'une quelconque des revendications précédentes, qui comprend l'étape d'imprégnation de la matrice poreuse par la seconde matière.

**5.** Procédé tel que revendiqué dans l'une quelconque des revendications précédentes, dans lequel la seconde matière est mélangée à un agent de réticulation.

**6.** Procédé tel que revendiqué à la revendication 5, dans lequel le rapport molaire de l'agent de réticulation à la seconde matière est au moins égal à 0,1 %.

**7.** Procédé tel que revendiqué à la revendication 5 ou à la revendication 6, dans lequel l'agent de réticulation forme un radical secondaire ou un radical non conjugué lorsque la membrane est irradiée.

**8.** Procédé tel que revendiqué dans l'une quelconque des revendications précédentes, dans lequel la seconde matière comprend un acide à insaturation éthylénique ou un ester d'un tel acide.

9. Procédé tel que revendiqué dans l'une quelconque des revendications précédentes, dans lequel la seconde matière et les conditions dans lesquelles elle est irradiée sont choisies de façon à conférer à la membrane une capacité d'échange d'ions supérieure à 1 milliéquivalent par gramme.

10. Procédé pour produire un dispositif électrochimique, qui comprend la production d'une membrane polymère composite, par un procédé tel que revendiqué dans l'une quelconque des revendications 1 à 9, et l'immersion de la membrane, avec une anode et une cathode, dans de l'électrolyte liquide.

11. Dispositif électrochimique qui comprend une anode, une cathode, un électrolyte liquide et un séparateur d'électrodes, qui est une membrane polymère composite produite par le procédé revendiqué dans l'une quelconque des revendications 1 à 9.

**Patentansprüche**

1. Verfahren zur Herstellung einer polymeren Ionenaustauschermembran, welches enthält:
   (a) Bereitstellung einer Membran, enthaltend ein erstes polymeres Material, welches eine poröse Matrix bestimmt, und ein zweites Material, welches einen Photoinitiator enthält und wenigstens teilweise die Poren der Matrix füllt und dadurch blockiert, und
   (b) UV-Bestrahlung der Membran, so daß das zweite Material polymerisiert und vernetzt wird,
   wobei die Dicke der Membran weniger als 250 $\mu$m beträgt.

2. Verfahren nach Anspruch 1, bei dem eine poröse Matrix des ersten polymeren Materials durch Entfernen eines porenbildenden Materials gebildet wird.

3. Verfahren nach Anspruch 2, bei dem das erste polymere Material Polyethylen ist und die poröse Matrix durch Flüssig-Extraktion von darin dispergiertem Polyethylenoxid gebildet wird.

4. Verfahren nach irgendeinem der vorangehenden Ansprüche, bei dem die poröse Matrix mit dem zweiten Material imprägniert wird.

5. Verfahren nach irgendeinem der vorhergehenden Ansprüche, bei dem das zweite Material mit einem Vernetzer gemischt wird.

6. Verfahren nach Anspruch 5, bei dem das Molverhältnis von Vernetzer zu zweitem Material wenigstens 0,1% beträgt.

7. Verfahren nach einem der Ansprüche 5 oder 6, bei dem der Vernetzer bei der Bestrahlung der Membran ein sekundäres Radikal oder ein tertiäres, nichtkonjugiertes Radikal bildet.

8. Verfahren nach irgendeinem der vorangehenden Ansprüche, bei dem das zweite Material eine ethylenisch ungesättigte Säure oder deren Ester enthält.

9. Verfahren nach irgendeinem der vorangehenden Ansprüche, bei dem das zweite Material und dessen Bestrahlungsbedingungen derart gewählt sind, daß die Membran eine Ionenaustauschkapazität von größer als 1 Milliäquivalent pro Gramm aufweist.

10. Verfahren zur Herstellung einer elektrochemischen Vorrichtung, bei dem eine Verbund-Polymermembran nach dem Verfahren gemäß irgendeinem der Ansprüche 1 bis 9 hergestellt und die Membran zusammen mit einer Anode und einer Kathode in flüssigen Elektrolyten getaucht wird.

11. Elektrochemische Vorrichtung, enthaltend eine Anode, eine Kathode, einen flüssigen Elektrolyten und einen Elektrodenscheider, der eine nach dem Verfahren gemäß irgendeinem der Ansprüche 1 bis 9 hergestellte Verbund-Polymermembran ist.